# EUROPEAN PATENT SPECIFICATION

(11) **EP 4 329 567 B1**
(45) Date of publication and mention of the grant of the patent: **02.12.2026**
(21) Application number: 22726839.8
(22) Date of filing: 27.04.2022
(51) Int. Cl.: A47J 31/18

(54) **APPARATUS FOR PREPARING BEVERAGES**
VORRICHTUNG ZUR ZUBEREITUNG VON GETRÄNKEN
APPAREIL DE PRÉPARATION DE BOISSONS

(30) Priority: 27.04.2021 IT 202100010619
(43) Date of publication of application: 06.03.2024
(73) Proprietor: Steampower Innovativa S.r.l., 37128 Verona (IT)
(72) Inventor: FACCO, Gianpaolo, 35012 CAMPOSAMPIERO (IT)
(74) Representative: Petraz, Gilberto Luigi
(86) International application number: PCT/IT2022/050111
(87) International publication number: WO 2022/229999

(56) References cited:
- WO-A1-2005/063094
- WO-A1-2007/045949
- WO-A1-2020/181212
- WO-A2-2006/128880
- US-A- 2 355 094
- US-A1- 2010 203 209

## Description

### FIELD OF THE INVENTION

The present invention concerns an apparatus for preparing flavored beverages. In particular, flavored beverages obtained by extraction, using a fluid extraction liquid, from any type of toasted or dried grain, toasted or dried spices, or from toasted or dried fruit.

### BACKGROUND OF THE INVENTION

Flavored beverages obtained from grains, spices or toasted or dried fruit have long been known, among which the best known is coffee.

Almost nine hundred aromatic and nutritional substances have been identified in the coffee bean, among which the most important are water, proteins and amino acids, lipids, carbohydrates and minerals. Among the minerals, potassium, calcium and magnesium are present in higher concentrations.

Different methods are known for preparing coffee, all of which comprise two distinct steps.

The known methods provide a first step of dry grinding the roasted coffee beans by fraction or impact, intended to increase the exchange surface between the coffee and the extraction liquid (usually water) in order to improve the extraction of the soluble substances contained in the beans.

The size of the particles obtained from dry grinding has an impact on the preparation of the beverage. Finer particles contribute to more effective extraction, while coarser particles ensure a good outflow of the extraction liquid.

After the dry grinding step, a second step of extracting the beverage from the ground product produced in the first step is carried out. As of today, three different types of processes are known for extracting coffee with water: percolation or dripping extraction, pressure extraction and extraction by infusion.

Among these three types of processes, pressure extraction provides the coffee that is most appreciated by consumers, due to its organoleptic properties, in particular when the coffee has been obtained by means of an espresso-type machine. Espresso is very widespread and appreciated, since it allows to obtain a very strong, concentrated and full-bodied beverage, with a more complex structure and with a layer of cream that covers the liquid. Espresso is the only type of coffee in which this layer of cream is present.

Espresso machines are provided with a pump that feeds hot water under pressure through the ground coffee, disposed in a drum in correspondence with a head for delivering the beverage. The increased water pressure allows to obtain a good flow of water even through a dose of finely ground coffee, while still maintaining the advantages of using a fine coffee powder in terms of efficiency of the extraction of aromas and other substances contained in the coffee, as well as the formation of the layer of cream.

Today there are various types of espresso machines, for home or professional use, which work with coffee beans (which are ground right in the machine itself), ground coffee, coffee capsules or coffee pods. All espresso machines have in common that they feed water under pressure into dry ground coffee, in line with what has been said about known beverage extraction processes.

One disadvantage of known machines for preparing coffee lies in the dry grinding of the coffee, which entails the loss of various volatile aromatic substances initially contained in the coffee beans, the oxidative acceleration of the oils and an irregularity in the granulometry of the powder obtained. The losses of volatile aromatic substances are due to the heat that develops in the grinding devices, in particular in electric grinders, and which can induce Maillard reactions that worsen the organoleptic qualities of the coffee-based beverage.

Another disadvantage of these coffee machines lies in the low inefficiency of extracting the coffee from the powder. It is estimated that known machines allow to extract about 30% of the substances originally contained in the beans.

For example, it has been possible to verify that, among the various substances contained in coffee beans, potassium is extracted but the other minerals remain in the coffee grounds, a large part of the lipids or fats is retained in the filter, proteins and amino acids are lost during roasting, as are soluble carbohydrates, while insoluble carbohydrates undergo a transformation.

Another disadvantage of known methods is precisely the coffee grounds which, as well as keeping many substances trapped, represent a considerable quantity of waste.

Another disadvantage of known machines is that the layer of cream obtained is small, usually about 10% of the beverage obtained. As well as not meeting the expectations of consumers, who like this cream, the small quantity vanishes in a very short time.

The Italian patent application 102020000011815 describes a method to prepare flavored beverages which allows to solve the problems identified above, in particular by providing a step of emulsifying the extraction liquid after it has been put in contact with a food substrate, but a machine that allows to carry out the method is not yet available.

Document WO-A-2007/045949 describes an apparatus for preparing flavored beverages of the coffee type, which works only with soluble coffee, optionally also with powdered milk. The apparatus comprises a mixing chamber in which soluble coffee and powdered milk, if provided, are dissolved in water. This document teaches that it is advantageous, in terms of organoleptic properties, to carry out the dissolving without stirring, and also states to have the advantage that it does not obtain foam. It can be observed that the mixing chamber is provided inside it with a rotor to operate a delicate mixing of the beverage, being provided to rotate at a speed lower than 500 rpm. This document is the opposite of the purposes of the present invention.

Document US2,355,094 describes an apparatus for preparing coffee comprising a first chamber equipped with a rotor and a mixing chamber below the first chamber in which the powdered coffee is disposed. The assembly formed by the first chamber and the mixing chamber is inserted inside an external container, into which water is introduced, as an extraction liquid, to be heated. After being heated, the water arrives at through holes provided in the lateral wall of the first chamber and then reaches the rotor. The rotor is made to rotate in order to push the water downward into the mixing chamber, where the water is forced through the coffee, in order to extract its organoleptic compounds. After this, the beverage extracted from the coffee is then pushed through the bottom wall of the mixing chamber in order to be separated from the powdered coffee. This apparatus does not provide a step of emulsifying the coffee, since the liquid that reaches the rotor is only water. Furthermore, the rotor, which is never in contact with the coffee, is provided only to push and force the water through the powdered coffee. One purpose of the known apparatus is to make a coffee beverage that does not include the oils extracted from the coffee. In the absence of oils, it is practically impossible to obtain any emulsion of the coffee.

WO-A1-2020/181212 describes a rotor-stator system to be included in apparatuses for preparing coffee beverages, in which the lateral wall of the stator is provided with through holes with sizes in the order of one centimeter. These through holes are not suitable to cause an emulsion of a coffee beverage.

US-A1-2010/203209 describes an apparatus for preparing a coffee beverage of the French press type, equipped with a rotor mixer located in an extraction chamber. The mixer is provided to rotate at low speed in order to keep the coffee particles suspended in the extraction liquid, so as to guarantee the uniformity of the coffee extraction conditions. This document does not mention any emulsion of the coffee. Furthermore, this known apparatus is configured to prepare large volumes of coffee beverage, so as to progressively deliver the beverage prepared. Preparing large volumes of coffee beverage is incompatible with obtaining a more voluminous and lasting foam.

WO-A1-2005/063094 discloses a beverage maker that has a foam unit comprising a rotatable receptacle divided into several foam compartments, the receptacle being placed inside a cup-shaped body that has an outlet for delivering the beverage. Foaming is obtained through the accumulation of the beverage inside the compartments. The rotatable receptacle is not provided to be immersed in the beverage, but only to receive it.

WO-A2-2006/128880 discloses an apparatus of the French press type, inside which a stirrer driven through a magnetic stirrer can be provided. Any emulsion obtainable from this apparatus is rather limited.

There is therefore a need to perfect an apparatus for preparing flavored beverages which can overcome at least one of the disadvantages of the state of the art.

In particular, one purpose of the present invention is to provide an apparatus for preparing flavored beverages which is more effective in terms of extracting the substances contained in the foods from which the beverages are obtained.

Another purpose is to provide an apparatus for preparing flavored beverages which prepares flavored beverages with improved organoleptic properties compared to known flavored beverages, in particular in terms of structure and complexity of the aromas.

Another purpose of the present invention is to provide an apparatus for preparing flavored beverages which prepares flavored beverages more concentrated in aromatic and nutritional substances originally contained in the starting food material.

Another purpose is to provide an apparatus for preparing flavored beverages which allows to obtain a thicker and more durable layer of foam.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

In accordance with the above purposes, in the following we describe an apparatus for preparing flavored beverages which overcomes the limits of the state of the art and eliminates the defects present therein.

The inventive idea provides an apparatus comprising an emulsifier device in order to emulsify the newly produced flavored beverage.

In accordance with some embodiments, there is provided an apparatus for preparing beverages, in particular flavored beverages starting from a food substrate. The food substrate is solid and in an incoherent form, for example in grains, granules, beans, and contains aromatic and nutritional substances to be extracted by means of an extraction liquid.

For this purpose, the apparatus comprises one or more first tanks, each one for containing an extraction liquid, a corresponding extraction unit and at least one delivery element.

Conveniently, the extraction unit is fluidically connected to the one or more first tanks so that the at least one extraction liquid can be fed to the extraction unit. The latter is also fluidically connected to the delivery element, in order to deliver the beverage after the extraction of the aromatic and nutritional substances from the food substrate by means of the extraction liquid. The extraction unit also comprises a motor member for it to be driven.

Advantageously, the apparatus also comprises at least a first feed member configured to feed the at least one extraction liquid from its tank to the extraction unit. The feed member can be of the pump or solenoid valve type, or suchlike. The apparatus also comprises a control unit connected both to the feed member and also to the extraction unit so as to selectively control and command them.

Preferably, the apparatus also comprises one or more second tanks, each one for containing a food substrate, fluidically connected to the extraction unit so that the food substrate can be fed toward it. More preferably, one or more second feed members are also provided, configured to feed a food substrate from their second tank toward the extraction unit. The second feed members are electrically connected to the control unit, so as to be selectively controlled and commanded by it.

The apparatus comprises an emulsifier device configured to emulsify the extraction liquid after it has performed the extraction of the aromatic and nutritional substances from the food substrate. The emulsion of the flavored beverage, by means of the turbulence created in the liquid, is made possible thanks to the presence among other substances of the oils contained in the food substrate, and also thanks to the presence of air inside the emulsifier device. In the case of coffee-type beverages, the emulsion also allows to create a more consistent and durable cream compared to the creams obtained so far.

The emulsifier device comprises a stator in which a rotor is at least partly housed and a receptacle in which the rotor and stator are located. The receptacle is provided with a bottom wall equipped with a through hole and an exit duct fluidically connected with the through hole and configured to allow the flavored beverage to exit after it has been emulsified.

The emulsifier device is provided downstream of the extraction unit. It can be placed upstream or downstream of the delivery element. In the latter case, the emulsifier device can be modular, that is, a component that can be easily mounted onto an existing apparatus, such as a plug-in. In particular, the modular emulsifier device is advantageously configured to be mounted at exit from the delivery element of the existing apparatus.

Advantageously, the stator comprises an entry aperture to allow the flavored beverage to be recirculated inside it.

Preferably, the stator has a perforated lateral wall, that is, in which a plurality of through holes of a preestablished size are made. In this way, during the operation of the emulsifier device, the rotation of the rotor pushes the substrate against the lateral wall of the rotor, causing the substrate to break up. The size of the through holes determines the size of the food substrate fragments. In order to perform an emulsion, the through holes have to have a small diameter, in particular with sub-centimeter sizes, preferably sub-millimeter sizes (that is, smaller than 1mm), for example micrometric sizes (that is, from 1µm to 500µm). The forced passage of a flavored beverage through holes of this size participates in its emulsion.

More preferably, the rotor is provided with one or more blades in order to carry out a cut on any fragments of the food substrate that may remain in the flavored beverage after the extraction of the aromatic and nutritional substances from the food substrate, and thus further reduce the sizes of the fragments. Doing so optimizes the extraction of the aromatic and nutritional substances from the substrate.

According to some embodiments, the rotor is provided with interference elements that develop longitudinally and that are configured to increase the turbulences in the flavored beverage and promote the emulsion as well as the pressure thereof against the lateral wall of the stator. Such interference elements can be configured as fins. It can be provided that such interference elements have at least one sharp edge, so as to function as blades.

According to some variants, the emulsifier device comprises a solenoid valve connected to the exit duct and configured to interrupt the exit of the flavored beverage.

According to other variants, the emulsifier device comprises, in correspondence with the bottom wall and inside the receptacle, an air suction element configured to draw air through the exit duct. The emulsifier device according to these variants can function in two ways: the emulsified flavored beverage can exit by gravity when the rotor is stopped, or the emulsified flavored beverage exits continuously.

In accordance with some variants, the apparatus for preparing beverages also comprises a heating device and/or a cooling device, which are configured to heat or cool the extraction liquid. For this purpose, the heating device and the cooling device are connected to the one or more first tanks, to the extraction unit, or to one or more of the pipes that connect the one or more first tanks to the extraction unit.

Alternatively or in addition, a carbonating device can be provided, configured to make a carbonated beverage. The carbonating device, if provided, is advantageously connected to the extraction unit.

According to one aspect, there is also provided a method to prepare a beverage, in particular a flavored beverage obtained by extracting aromatic and nutritional substances from a food substrate by means of an extraction liquid. Such food substrate is solid and in an incoherent form, for example in grains, granules, beans.

The method provides to make available an apparatus as in any claims 1 to 9.

In accordance with some embodiments, the apparatus also comprises one or more second tanks, each one for containing a food substrate, fluidically connected to the extraction unit, and one or more second feed members for feeding the substrate from the corresponding second tank toward the extraction unit, electrically connected to the control unit.

The method provides the steps of feeding at least one predefined dose of flavored beverage to the emulsifier device, and driving the emulsifier device in order to emulsify the beverage.

According to one aspect not covered by the present claims, there is also provided a modular emulsifier device, or plug-in, to be added to an already existing apparatus at exit from the delivery element of the apparatus. Such modular emulsifier device preferably comprises a receptacle, more preferably hermetically closed, a stator inside the receptacle, a rotor inside the receptacle and located at least partly inside the stator, the rotor being rotatable around an axis of rotation thereof. The modular emulsifier device also comprises, advantageously, a motor connected to the rotor in such a way as to drive it in rotation around its own axis of rotation. In the receptacle there is provided an entry aperture for a flavored beverage, which can be connected to the exit of a delivery element of an apparatus for preparing flavored beverages.

### DESCRIPTION OF THE DRAWINGS

These and other aspects, characteristics and advantages of the present invention will become apparent from the following description of some embodiments, given as a non-restrictive example with reference to the attached drawings wherein:
- fig. 1 is a schematic view of an apparatus for preparing of beverages according to an embodiment not covered by the present claims
- fig. 2 is a lateral view of an extraction unit of the apparatus of fig. 1;
- fig. 3 is a lateral view of a detail of fig. 2;
- fig. 4 is a plan view, from below, of an element of fig. 3;
- figs. 5a-5c are three-dimensional views of some variants of an emulsifier device;
- figs. 6a-6d are schematic three-dimensional views of an emulsifier device in successive operating steps;
- fig. 7 is a schematic view of an apparatus for preparing beverages according to other embodiments not covered by the present claims
- fig. 8 is a schematic view of an apparatus for preparing beverages according to other embodiments not covered by the present claims; and
- figs. 9, 10 and 11 are schematic views of an apparatus for preparing of beverages according to further embodiments.

To facilitate comprehension, the same reference numbers have been used, where possible, to identify identical common elements in the drawings. It is understood that elements and characteristics of one embodiment can be conveniently combined or incorporated into other embodiments without further clarifications.

### DESCRIPTION OF SOME EMBODIMENTS

We will now refer in detail to the possible embodiments of the invention, of which one or more examples are shown in the attached drawings, by way of a non-limiting illustration. The phraseology and terminology used here is also for the purposes of providing non-limiting examples.

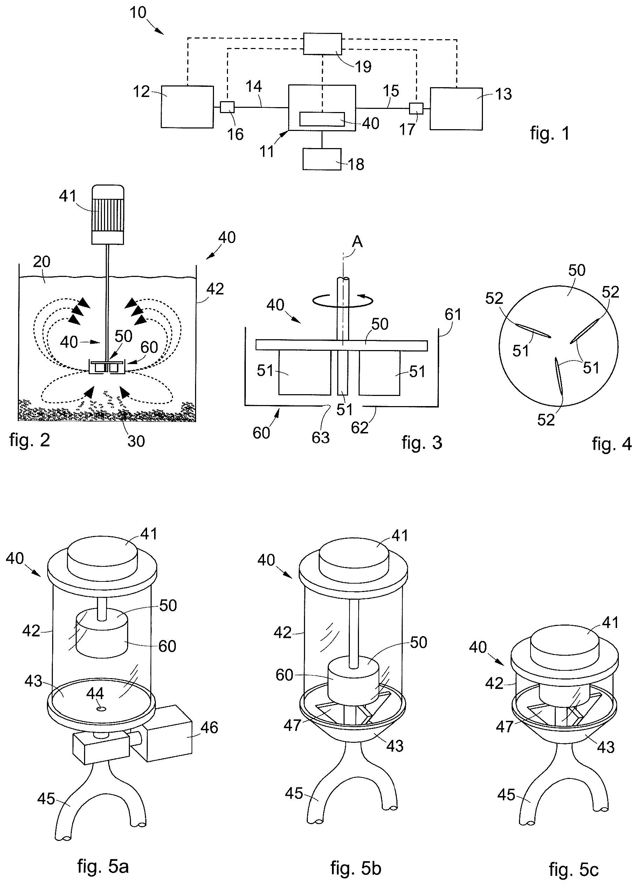

Fig. 1 schematically shows an apparatus 10 for preparing beverages, of the flavored beverages 20 type obtained by means of extraction of aromatic and nutritional substances from at least one food substrate 30. The extraction occurs by means of an extraction liquid.

The at least one substrate is in an incoherent solid form, and in particular it can be of the following types: roasted or dried grains (for example: coffee, barley, corn, rice, wheat, sorghum, millet, oats, triticale, rye, fonio, quinoa, cocoa, cola), roasted or dried spices (for example: tea, anise, cinnamon, cardamom, cloves, ginseng, ginger, yerba mate, guarana, chamomile, thyme, lemon balm, juniper, marjoram, saffron, turmeric, licorice, rosemary, eucalyptus, mint, coriander, cumin, nutmeg, paprika, pepper, chili pepper, fennel seeds, poppy seeds, mustard, sesame, tamarind, vanilla, myrtle, oregano, sage, parsley, leek, garlic, lavender, isop, tarragon, calendula, caper), or toasted or dried fruit (for example: apricot, pineapple, cherry, kiwi, fig, apple, mango, coconut, melon, blueberry, papaya, peach, pear, plum, banana, raisin, citrus, walnut, hazelnut, cashew, almond, peanut, date, pine nut, pistachio).

The extraction liquid is an edible liquid that can be used for preparing aromatic beverages. Typically, the extraction liquid 30 is water; however, other types of ingestible liquids can also be provided, for example milk of animal origin or of vegetable origin, other water-based beverages or a mixture of one or more of these.

The apparatus 10 comprises an extraction unit 11 fluidically connected to a first tank 12 for the extraction liquid and to a second tank 13 for the food substrate 30 by means of corresponding pipes 14, 15 (fig. 1) provided with corresponding feed members 16, 17 for feeding, respectively, the extraction liquid and the food substrate 30 from their own tanks 12, 13 toward the extraction unit 11. In this way, it is possible to operate the contact between the extraction liquid and the food substrate 30 in the extraction unit 11.

The feed members 16, 17 are advantageously pumps; however, they can also be of another type, such as for example solenoid valves. In any case, the pumps 16, 17 are configured to feed predefined doses of extraction liquid and food substrate 30, respectively.

It should be noted that no grinding device is provided between the second tank 13 and the extraction unit 11. The food substrate 30 reaches the extraction unit 11 without undergoing any transformation or processing, other than possibly being heated or cooled. All the processing of the food substrate 30, as well as the extraction of its aromatic and nutritional substances, which determine the preparation of the beverage itself, occur in the extraction unit 11.

The latter is also fluidically connected to a delivery element 18 configured to deliver the beverage, just prepared, outside the apparatus, typically into a suitable container such as a cup, glass or suchlike, which allows a user to consume the beverage (fig. 1).

The apparatus 10 also comprises a control unit 19 electrically connected to the pumps 16, 17 as well as to the extraction unit 11, in order to be able to selectively command them, based on the requirements. The control unit 19 is also connected to the tanks 12, 13 in order to control the quantity of liquid or substrate 30 inside them.

Conventionally, the apparatus 10 is also provided with a control interface connected to the control unit 19 in order to allow a user to drive the preparation and delivery of a beverage. The control interface is of a well-known type and, for simplicity, it is not shown or described.

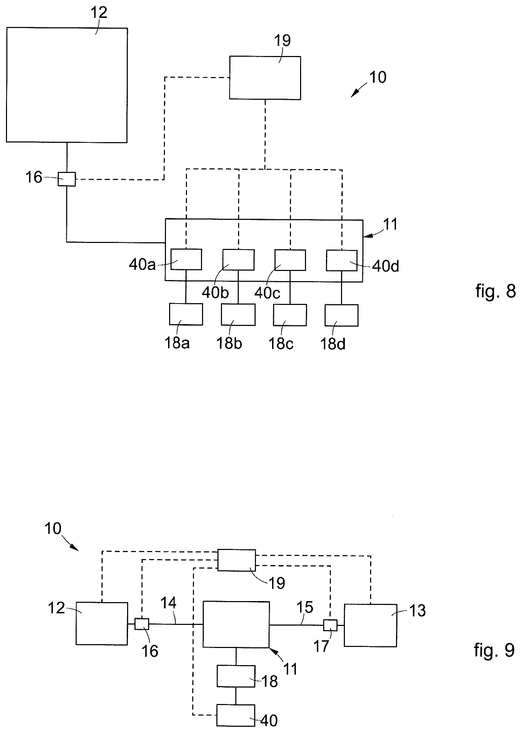

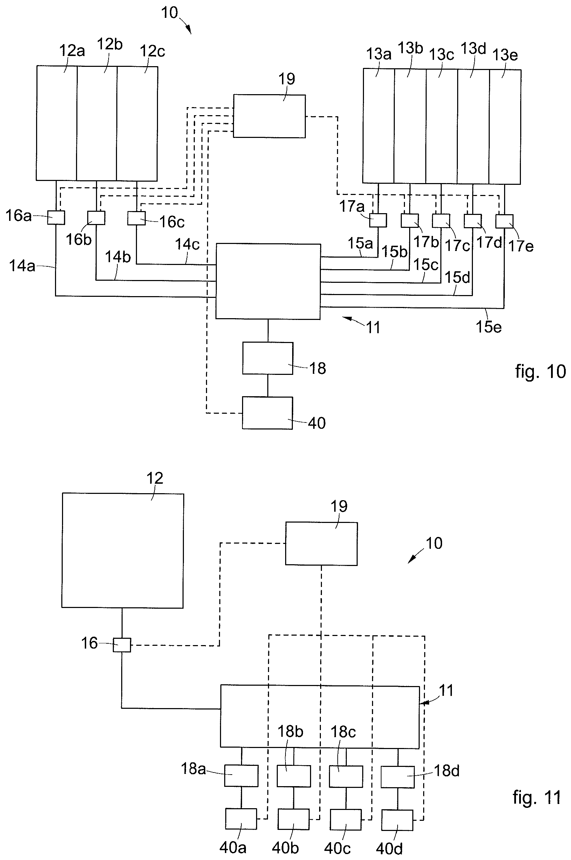

The extraction unit 11 comprises an emulsifier device 40 (figs. 1 and 2) provided with a motor 41 for its actuation and disposed in a receptacle 42 in which there is received the flavored beverage 20 obtained from the interaction between the extraction liquid and the food substrate 30, which are fed from the respective tanks 12, 13. The extraction liquid and the food substrate 30 can also be received in the receptacle 42 and emulsified after the aromatic and nutritional substances have been extracted from the food substrate 30. According to the invention, the emulsifier device 40 is provided downstream of the extraction unit 11 (figs. 9, 10 and 11).

The emulsifier device 40 comprises a rotor 50 rotatable around an axis of rotation A thereof and inserted in a stator 60 located inside the receptacle 42 (fig. 3). In particular, the stator 60 is positioned at an intermediate height of the receptacle 42, in such a way as to be integrally immersed in the extraction liquid after it has been fed (fig. 2).

The rotor 50 is configured as a plunger and comprises interference elements 51 which develop longitudinally from the free end of the plunger 50 in order to better interfere with the extraction liquid, so as to make the emulsion and extraction step more effective (figs. 3 and 4). These interference elements are configured as fins 51, for example inclined with respect to radial directions to the axis of rotation A of the plunger 50.

Favorably, a lateral edge 52 of each of the fins 51 is sharp, so that the fins 51 function as blades and cut any fragments of the substrate 30 remaining in the flavored beverage 20 during the rotation of the plunger 50.

The stator 60 is instead configured as a basket with a circular cross-section, comprising a lateral wall 61 and a bottom 62. The basket 60 is provided with a passage aperture 63 to allow the passage of the extraction liquid and above all of the food substrate 30 (figs. 2 and 3). The passage aperture 63 is advantageously provided in the bottom 62, more advantageously in a central position, in such a way as to be, during use, coaxial with the axis of rotation A of the plunger 50 (fig. 3).

Furthermore, the lateral wall 61 is perforated with a plurality of through holes 64 of predefined lateral size, in particular smaller than 1 cm, for example of the order of a few micrometers. One example of the lateral sizes of the holes is between 50 and 150 mesh, which corresponds to approximately 100-300 µm. In this way, the emulsion of the flavored beverage 20 is further promoted by forcing it through the small-sized holes.

Figs. 5a, 5b and 5c show three variants of the emulsifier device 40. In these variants, the receptacle 42 has a bottom wall 43 equipped with a through hole 44 in a substantially central position and with an exit duct 45 for the exit of the flavored beverage 20 from the receptacle 42. The three variants shown in figs. 5a, 5b, 5c each have a respective delivery mechanism to deliver the flavored beverage 20.

In the variant of fig. 5a, the exit duct 45 is equipped with a solenoid valve 46, configured to open when the emulsion step ends, that is, when the operation of the emulsifier device 40 is stopped. The solenoid valve 46 can be connected to the motor 41 of the emulsifier device 40, or to the control unit 19 of the apparatus for preparing flavored beverages 20.

In the variant of fig. 5b, the bottom wall 43 of the receptacle 42 has a hollowed shape, in particular truncated-conical, and it houses an air suction element 47, in particular a fan, which draws the air through the exit duct 45, without any tap. The air thus drawn serves to emulsify the flavored beverage 20. Once the emulsion step is over, the motor 41 stops and the emulsified flavored beverage 20 descends through the exit duct 45 by gravity.

The variant of fig. 5c is similar to that of fig. 5b, that is, it comprises a fan 47 in a cavity defined by the bottom wall 43 of the receptacle 42, but differs in operation. In this variant, the flavored beverage 20 is discharged continuously. This gives the advantage of not having to accumulate a volume of flavored beverage 20 in the receptacle 42, and therefore makes it possible to decrease the sizes of the receptacle 42, as schematically shown. An emulsifier device 40 with reduced sizes can be more easily integrated into existing apparatuses, and therefore is better suited for use as a modular device, or plug-in.

It should be noted that these three variants can be provided on an emulsifier device 40 regardless of whether it is already integrated in an apparatus 10 or whether it is a modular device to be mounted on an already existing apparatus 10.

The operation of the apparatus 10 provides that a user starts, by means of the control interface, the preparation and delivery of a flavored beverage 20. The command is transmitted to the control unit 19 that drives the pumps 16, 17 in order to feed a predefined dose of extraction liquid and a predefined dose of substrate 30 into the receptacle 42 of the extraction unit 11. It should be noted that the dose of extraction liquid, the sizes of the receptacle 42 and the position of the basket 60 of the emulsifier device 40 are such that when the dose of extraction liquid has been delivered, the basket 60 and the free end of the plunger 50 located therein are totally immersed in the liquid.

Subsequently, the control unit 19 commands the extraction of the aromatic and nutritional substances from the food substrate 30 in order to produce the flavored beverage 20. The control unit 19 then provides to command the motor 41 in order to drive the rotation of the plunger 50 around its own axis of rotation A.

The rotation is at high speed, for example from 1000 to 10000 rpm. The rotation of the plunger 50, in particular due to the fins 51, causes the formation of a vortex which exerts a strong suction which attracts the flavored beverage 20 from the bottom of the receptacle 42 toward the basket 60 above, and makes the flavored beverage 20 pass through the entry aperture 63 (figs. 2 and 5a). Since the suction is substantially coaxial to the axis of rotation A of the plunger 50, a coaxial position of the entry aperture 63 allows an optimal suction of the flavored beverage 20 toward the inside of the basket 60. Together with the flavored beverage 20, any fragments of food substrate 30 remaining in the flavored beverage 20 can also be suctioned.

Once the flavored beverage 20 is inside the basket 60, it is pushed against the lateral wall 61 due to the centrifugal force produced by the rotating plunger 50 (fig. 5b). This action determines an additional action of emulsification of the flavored beverage 20, due to its forced passage through the through holes 64. Furthermore, it also determines an action of cutting or crushing of the fragments of food substrate 30, if present, due to the friction of such fragments against the wall 61, and it is accentuated by the presence of the through holes 64. In the meantime, the fragments undergo another cutting action by the sharp edges 52 of the fins 51.

After the cutting, the rotation of the plunger 50 causes the forced expulsion of the flavored beverage 20 and of the potential fragments of food substrate 30 through the through holes 64 toward the outside of the basket 60 (fig. 5c). The expelled flavored beverage 20 is then entrained in the recirculation of the extraction liquid, as shown in figs. 2 and 5d. The combination of the vertical suction, from under the plunger 50, and of the radial expulsion of the flavored beverage 20 and of any fragments of food substrate 30 produces a continuous circulatory current of the flavored beverage 20 and of the fragments of substrate 30 inside the liquid.

After a predetermined period of time, the control unit 19 stops the motor 41 and commands the delivery of the flavored beverage 20 through the delivery element 18, which is directly connected to the extraction unit 11, in particular to the receptacle 42.

In the event that the emulsifier device 40 is downstream of the extraction unit 11, the control unit 19 commands the delivery of the flavored beverage 20 by means of the delivery element in such a way that the flavored beverage 20 reaches the emulsifier device 40, and subsequently it provides to command the emulsion step, through the motor 41.

It can therefore be deduced that the emulsion step yields a further fragmentation of any fragments of food substrate 30 remaining in the flavored beverage 20. This further fragmentation allows to optimize the extraction of the aromatic and nutritional substances of the food substrate 30, further optimized by the recirculation of the fragments under the effect of the high-speed rotation of the rotor 50.

It is also to be emphasized that the further crushing of the food substrate 30 occurs precisely inside the flavored beverage 20, which allows to prevent the loss of volatile substances which, as soon as they are released from the substrate 30, are immediately solubilized in the extraction liquid and end up in the flavored beverage 20.

Furthermore, the step of emulsion of the flavored beverage 20 allows to incorporate within it the air present inside the emulsifier device 40, thus producing a foam or cream that is more consistent, more durable and in greater quantity than what is obtained with known apparatuses. This occurs in particular when the food substrate 30 is of the coffee type, and/or when the extraction liquid is dairy or also water.

The extraction unit 11 of the invention can be easily installed in any type whatsoever of apparatus 10 for preparing flavored beverages 20. For example, the variant shown in fig. 1, with a first tank 12 for an extraction liquid and a second tank 13 for a food substrate 30, can be applied to a machine for domestic use, of the known espresso machines type.

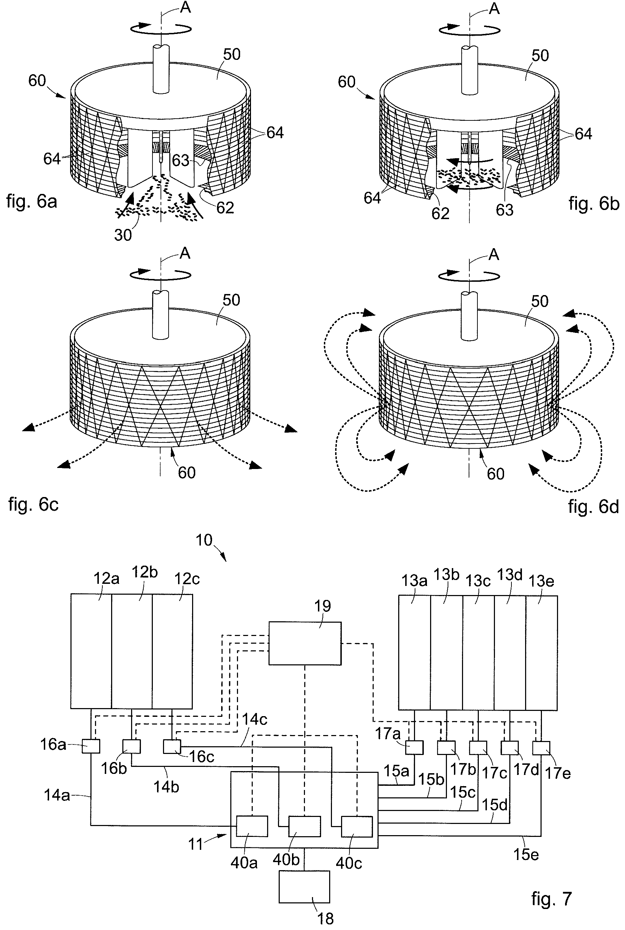

Fig. 6 instead shows a variant of the apparatus 10 which provides a plurality of first tanks 12a-12c for feeding the same number of extraction liquids, and a plurality of second tanks 13a-13e for feeding the same number of food substrates 30. Each of the tanks 12a-c, 13a-e is fluidically connected to the extraction unit 11 by means of a respective pipe 14a-c, 15a-e, each pipe 14a-c, 15a-e being provided with a corresponding pump 16a-c, 17a-e.

In the example shown, the extraction unit 11 also comprises three emulsifier devices 40a-40c. For example, each emulsifier device 40a-40c can be connected to a respective first tank 12a-c so as to receive a single extraction liquid and thus prevent contaminations between them.

The variant schematically shown in fig. 6 lends itself well to be used as an automatic machine to be placed in a public place.

In another variant, schematically shown in fig. 7, the apparatus 10 comprises only one first tank 12 for the extraction liquid, fluidically connected to the extraction unit 11 which comprises four emulsifier devices 40a-c, the receptacle 42 of which is removable. The food substrate 30 is fed manually directly into each of the receptacles 42, which are then reinserted into the respective emulsifier device 40a-d. This configuration is well suited to be used as an espresso machine for a bar. It can also be provided that the extraction unit 11 comprises a single emulsifier device 40, this configuration being more suitable for domestic use.

According to alternative embodiments, the emulsifier device 40 is provided as a module 100 to be mounted on already existing machines for preparing beverages, more precisely on the delivery unit 18, as shown in figs. 9-11. In this case, the module 100 can be mounted on any type whatsoever of machine for preparing beverages, for example for domestic use, for professional use or even on automatic vending machines.

It is clear that modifications and/or additions of parts or steps may be made to the apparatus and to the method as described heretofore, without departing from the field and scope of the present invention as defined by the claims.

In the following claims, the sole purpose of the references in brackets is to facilitate reading: they must not be considered as restrictive factors with regard to the field of protection claimed in the specific claims.

## Claims

1. Apparatus (10) for preparing flavored beverages (20) starting from a food substrate (30), comprising at least a first tank (12) for containing an extraction liquid, a corresponding extraction unit (11) and at least one delivery element (18), said apparatus (10) comprising at least one emulsifier device (40) configured to emulsify a flavored beverage (20) obtained from said extraction liquid and said food substrate (30), **characterized in that** said emulsifier device (40) comprises a stator (60) in which a rotor (50) is at least partly housed and a receptacle (42) in which the rotor and stator are located, said receptacle (42) being provided with a bottom wall (43) equipped with a through hole (44) and an exit duct (45) fluidically connected to said through hole (44) and configured to allow the flavored beverage to exit after it has been emulsified, **and in that** said emulsifier device (40) is disposed downstream of said extraction unit (11).

2. Apparatus (10) as in claim 1, **characterized in that** said stator (60) comprises an entry aperture (63) to allow the entry of said food substrate (30).

3. Apparatus (10) as in claim 2, **characterized in that** said stator (60) comprises a lateral wall (61) in which a plurality of through holes (64) are made, with a diameter smaller than 1 mm.

4. Apparatus as in claim 2 or 3, **characterized in that** said rotor (50) comprises one or more interference elements (51) configured to increase, during use, the turbulences in the flavored beverage (20).

5. Apparatus as in any claim from 2 to 4, **characterized in that** said rotor (50) comprises one or more blades (52) to carry out a cut of fragments of said food substrate (30) possibly present in said flavored beverage (20).

6. Apparatus (10) as in any claim hereinbefore, **characterized in that** it comprises at least a second tank (13) for containing the food substrate (30), fluidically connected to the extraction unit (11).

7. Apparatus (10) as in any claim hereinbefore, **characterized in that** said emulsifier device (40) is modular and is configured to be mounted at exit from said delivery element (18).

8. Apparatus (10) as in any claim from 2 to 7, **characterized in that** said receptacle (42) is provided with a bottom wall (43) in which a through hole (44) is made and to which an exit duct (45) is connected, **and in that** it comprises, in correspondence with said exit duct (45), a solenoid valve (46) to interrupt the exit of said flavored beverage (20).

9. Apparatus (10) as in any claim from 2 to 7, **characterized in that** said receptacle (42) comprises, in correspondence with said bottom wall (43) and inside said receptacle (42), an air suction element (47) configured to draw air through said exit duct (45).

10. Method to prepare a flavored beverage (20) by extracting aromatic and nutritional substances from a food substrate (30) by means of an extraction liquid, using an apparatus (10) as in any claim from 1 to 9.

11. Method as in claim 10, **characterized in that** it provides the steps of feeding to said emulsifier device (40) at least one predefined dose of flavored beverage (20), and subsequently a step of driving said emulsifier device (40) in order to emulsify said flavored beverage (20).

## Patentansprüche

1. Vorrichtung (10) zur Zubereitung von aromatisierten Getränken (20) ausgehend von einem Lebensmittelsubstrat (30), umfassend zumindest einen ersten Tank (12) zum Enthalten einer Extraktionsflüssigkeit, eine entsprechende Extraktionseinheit (11) und zumindest ein Abgabeelement (18), wobei die Vorrichtung (10) zumindest eine Emulgatorvorrichtung (40) umfasst, die dafür ausgelegt ist, ein aromatisiertes Getränk (20) zu emulgieren, das aus der Extraktionsflüssigkeit und dem Lebensmittelsubstrat (30) erhalten wird, **dadurch gekennzeichnet, dass** die Emulgatorvorrichtung (40) einen Stator (60), in dem ein Rotor (50) zumindest teilweise beherbergt ist, und einen Behälter (42) umfasst, in dem der Rotor und der Stator gelegen sind, wobei der Behälter (42) mit einer Bodenwand (43) versehen ist, die mit einem Durchgangsloch (44) und einem Austrittsrohr (45) ausgestattet ist, das mit dem Durchgangsloch (44) fluidmäßig verbunden ist und dafür ausgelegt ist, dem aromatisierten Getränk zu ermöglichen, auszutreten, nachdem es emulgiert wurde, **und dass** die Emulgatorvorrichtung (40) stromabwärts der Extraktionseinheit (11) angeordnet ist.

2. Vorrichtung (10) nach Anspruch 1, **dadurch gekennzeichnet, dass** der Stator (60) eine Eintrittsöffnung (63) umfasst, um den Eintritt des Lebensmittelsubstrats (30) zu ermöglichen.

3. Vorrichtung (10) nach Anspruch 2, **dadurch gekennzeichnet, dass** der Stator (60) eine Seitenwand (61) umfasst, in der eine Vielzahl von Durchgangslöchern (64), mit einem Durchmesser kleiner als 1 mm, ausgebildet sind.

4. Vorrichtung nach Anspruch 2 oder 3, **dadurch gekennzeichnet, dass** der Rotor (50) ein oder mehrere Interferenzelemente (51) umfasst, die dafür ausgelegt sind, während des Einsatzes, die Verwirbelungen im aromatisierten Getränk (20) zu erhöhen.

5. Vorrichtung nach einem der Ansprüche 2 bis 4, **dadurch gekennzeichnet, dass** der Rotor (50) ein oder mehrere Blätter (52) umfasst, um einen Schnitt von Fragmenten des Lebensmittelsubstrats (30) durchzuführen, die möglicherweise im aromatisierten Getränk (20) vorhanden sind.

6. Vorrichtung (10) nach einem der vorhergehenden Ansprüche, **dadurch gekennzeichnet, dass** sie zumindest einen zweiten Tank (13) zum Enthalten des Lebensmittelsubstrats (30) umfasst, der mit der Extraktionseinheit (11) fluidmäßig verbunden ist.

7. Vorrichtung (10) nach einem der vorhergehenden Ansprüche, **dadurch gekennzeichnet, dass** die Emulgatorvorrichtung (40) modular ist und dafür ausgelegt ist, am Austritt aus dem Abgabeelement (18) montiert zu werden.

8. Vorrichtung (10) nach einem der Ansprüche 2 bis 7, **dadurch gekennzeichnet, dass** der Behälter (42) mit einer Bodenwand (43) versehen ist, in der ein Durchgangsloch (44) ausgebildet ist und mit der ein Austrittsrohr (45) verbunden ist, **und dass** sie, in Übereinstimmung mit dem Austrittsrohr (45), ein Magnetventil (46) umfasst, um den Austritt des aromatisierten Getränkes (20) zu unterbrechen.

9. Vorrichtung (10) nach einem der Ansprüche 2 bis 7, **dadurch gekennzeichnet, dass** der Behälter (42), in Übereinstimmung mit der Bodenwand (43) und innerhalb des Behälters (42), ein Luftansaugelement (47) umfasst, das dafür ausgelegt ist, Luft durch das Austrittsrohr (45) anzusaugen.

10. Verfahren zur Zubereitung eines aromatisierten Getränkes (20) durch Extrahieren von aromatischen und Nahrungsstoffen aus einem Lebensmittelsubstrat (30) mittels einer Extraktionsflüssigkeit, unter Verwendung einer Vorrichtung (10) nach einem der Ansprüche 1 bis 9.

11. Verfahren nach Anspruch 10, **dadurch gekennzeichnet, dass** es die Schritte des Zuführens an die Emulgatorvorrichtung (40) zumindest einer vordefinierten Dosis von aromatisiertem Getränk (20), und anschließend einen Schritt des Antreibens der Emulgatorvorrichtung (40), um das aromatisierte Getränk (20) zu emulgieren, vorsieht.

## Revendications

1. Appareil (10) pour préparer des boissons aromatisées (20) à partir d'un substrat alimentaire (30), comprenant au moins un premier réservoir (12) pour contenir un liquide d'extraction, une unité d'extraction (11) correspondante et au moins un élément de distribution (18), ledit appareil (10) comprenant au moins un dispositif émulsionneur (40) configuré pour émulsionner une boisson aromatisée (20) obtenue à partir dudit liquide d'extraction et dudit substrat alimentaire (30), **caractérisé en ce que** ledit dispositif émulsionneur (40) comprend un stator (60) dans lequel un rotor (50) est au moins partiellement logé et un réceptacle (42) dans lequel le rotor et le stator sont situés, ledit réceptacle (42) étant pourvu d'une paroi de fond (43) munie d'un trou traversant (44) et d'un conduit de sortie (45) en communication fluidique avec ledit trou traversant (44) et configuré pour permettre à la boisson aromatisée de sortir après qu'elle a été émulsionnée, et **en ce que** ledit dispositif émulsionneur (40) est disposé en aval de ladite unité d'extraction (11).

2. Appareil (10) selon la revendication 1, **caractérisé en ce que** ledit stator (60) comprend une ouverture d'entrée (63) pour permettre l'entrée dudit substrat alimentaire (30).

3. Appareil (10) selon la revendication 2, **caractérisé en ce que** ledit stator (60) comprend une paroi latérale (61) dans laquelle est réalisée une pluralité de trous traversants (64) d'un diamètre inférieur à 1 mm.

4. Appareil selon la revendication 2 ou 3, **caractérisé en ce que** ledit rotor (50) comprend un ou plusieurs éléments d'interférence (51) configurés pour augmenter, lors de l'utilisation, les turbulences dans la boisson aromatisée (20).

5. Appareil selon l'une quelconque des revendications 2 à 4, **caractérisé en ce que** ledit rotor (50) comprend une ou plusieurs lames (52) pour effectuer une coupe de fragments dudit substrat alimentaire (30) éventuellement présents dans ladite boisson aromatisée (20).

6. Appareil (10) selon l'une quelconque des revendications précédentes, **caractérisé en ce qu'**il comprend au moins un deuxième réservoir (13) pour contenir le substrat alimentaire (30), en communication fluidique avec l'unité d'extraction (11).

7. Appareil (10) selon l'une quelconque des revendications précédentes, **caractérisé en ce que** ledit dispositif émulsionneur (40) est modulaire et est configuré pour être monté à la sortie dudit élément de distribution (18).

8. Appareil (10) selon l'une quelconque des revendications 2 à 7, **caractérisé en ce que** ledit réceptacle (42) est pourvu d'une paroi de fond (43) dans laquelle un trou traversant (44) est réalisé et à laquelle un conduit de sortie (45) est relié, et **en ce qu'**il comprend, au niveau dudit conduit de sortie (45), une électrovanne (46) pour interrompre la sortie de ladite boisson aromatisée (20).

9. Appareil (10) selon l'une quelconque des revendications 2 à 7, **caractérisé en ce que** ledit réceptacle (42) comprend, au niveau de ladite paroi de fond (43) et à l'intérieur dudit réceptacle (42), un élément d'aspiration d'air (47) configuré pour aspirer de l'air par ledit conduit de sortie (45).

10. Procédé pour préparer une boisson aromatisée (20) par extraction de substances aromatiques et nutritives à partir d'un substrat alimentaire (30) au moyen d'un liquide d'extraction, utilisant un appareil (10) selon l'une quelconque des revendications 1 à 9.

11. Procédé selon la revendication 10, **caractérisé en ce qu'**il prévoit les étapes consistant à alimenter ledit dispositif émulsionneur (40) avec au moins une dose prédéfinie de boisson aromatisée (20), et ensuite une étape consistant à actionner ledit dispositif émulsionneur (40) afin d'émulsionner ladite boisson aromatisée (20).
